# EUROPEAN PATENT APPLICATION

(11) **EP 2 711 903 A1**
(43) Date of publication of application: **26.03.2014**
(21) Application number: 12306154.1
(22) Date of filing: 24.09.2012
(51) Int. Cl.: G07F 7/08

(54) **Method to securely manage and confirm a transaction**

(71) Applicant: Gemalto SA, 92190 Meudon (FR)
(72) Inventor: Salgado, Stéphanie, 13705 La Ciotat (FR); Grellier, Stéphane, 13705 La Ciotat (FR)

(57) **Abstract**

The present invention relates to a method to manage and confirm a transaction using a terminal (T) and a smart card (SC) having an associated PIN code (1234) and a pair of private/public keys, said smart card (SC) being interfaced with said terminal (T). According to the invention, before the encapsulation step (E3) of an EMV frame serving to transmit an entered PIN code to the smart card (SC), the terminal (T) generates (E2) a terminal challenge (TUN), the encapsulation step (E3) being such that said terminal challenge (TUN) is encapsulated with the PIN code in the EMV frame (EF(XXXX,TUN)). According to the invention, the smart card is able to return the terminal challenge (TUN) with the PIN approval or disapproval, the returned terminal challenge (TUN) being checked by the terminal (T).

## Description

### FIELD OF THE INVENTION

The present invention relates to a method to manage and confirm a transaction using a terminal and a smart card interfaced with said terminal. More specifically the invention concerns a method comprising the steps of requiring a PIN code to be entered by a user by the terminal, encapsulating the PIN code in encapsulated data and transmitting these data to the smart card. The smart card then decrypts the encapsulated data, checks the decrypted PIN code and, in case the decrypted PIN code is correct, sends a PIN approval to the terminal.

The invention also pertains to a transaction terminal enabling the implementation of said method as soon as a smart card is interfaced with said transaction terminal.

### BACKGROUND OF THE INVENTION

When a card is stolen, the thief generally does not know the PIN code.

To by-pass this problem, the thief may introduce a fake card between the terminal and the stolen card. This malicious is known under the terms "card in the middle". The Fake card always answers OK on a verify PIN command. As the terminal believes the card status, it continues the transaction believing the PIN was checked.

The remaining of the transaction is performed normally between the terminal and the real card.

A similar security flaw exists with an encrypted PIN command. In this case, the EMV norm specifies that the terminal encapsulates the PIN in a frame of size the modulus of the RSA key of the card (typically 1024 bits).

The frame content comprises a standard 7F tag, a PIN block, an ICC challenge and a random padding.

The ICC challenge is typically an unpredictable Number previously generated and transmitted by the card to the terminal.

Next step consists, for the terminal, to encrypt the frame with the public RSA key of the card.

At the reception of the encrypted PIN, a real card decrypts the frame and performs three checks:
- Is the ICC challenge equal to the one it produced?
- Is the format correct? i.e. is the Header byte present and equal to 7F?
- If the format is correct, does the PIN in the PIN block match the one stored in the card?

If the PIN is correct, the real card sends OK. Otherwise it sends to the terminal a NOK.

A fake card may skip all the steps realized in a real card, i.e. the decryption step and the three-check steps and may return OK independently of the PIN value and of the frame format. Such a card is typically called "yes-card".

This flaw is due to the fact that the terminal does not perform any check.

A partial solution exists in the CDA model where, for some applications, the terminal resends the status of the PIN to the card. The card, supposed to be real controls that this status is the same than the internal one. This solution only works in CDA model. In any case no responsibility is conferred to the terminal and the terminal must consequently trust the card.

Further alternative and advantageous solutions would, accordingly, be desirable in the art.

### SUMMARY OF THE INVENTION

The present invention aims in solving the security problem encountered in known solutions where checks are realized only on the smart card's side. Thus the present invention aims at avoiding the above-mentioned malicious attacks.

The present invention is defined as a method to manage and confirm a transaction using a terminal and a smart card having an associated PIN code and a pair of private/public keys, said smart card being interfaced with said terminal, said method comprising the steps of :
- for the terminal, requiring a PIN code to be entered by a user,
- for the terminal, encapsulating the PIN code in an EMV frame encrypted with the public key of the smart card,
- for the terminal, transmitting the encrypted EMV frame to the smart card,
- for the smart card, decrypting the encrypted EMV frame,
- for the smart card, checking the decrypted PIN code,
- for the smart card, in case the decrypted PIN code is correct, sending a PIN approval to the terminal, and a disapproval otherwise,
said method being **characterized in that** it further comprises steps of:
- for the terminal, before the encapsulation step, generating a terminal challenge, the encapsulation step being such that said terminal challenge is encapsulated with the PIN code in the EMV frame,
- for the smart card, after decryption of the EMV frame, checking the availability of the terminal challenge in the decrypted EMV frame,
- if available, for the smart card, returning the decrypted terminal challenge to the terminal,
- for the terminal, confirming transaction after reception and check of the PIN approval or disapproval and of the returned decrypted terminal challenge.

The invention exploits the fact that the card first transfers a public key to the terminal in order to enable the terminal to encrypt data before transmission. It is recognized that the terminal can trust the public key sent by the card as this key is certified by the certificate chain.

Transmission means between the card and the terminal are thus, minimally, able to transmit data of the size of such a public key and the protocol frame can be used for other purposes.

The invention exploits such a frame of size the modulus of the key, in general an RSA key, typically of 1024 bits.

As the RSA key size that is much bigger than the currently used frame content, a field is added in the frame according to the invention to enable the terminal to challenge the card.

As, with the invention, the card needs to decrypt the frame in order to be able to return the terminal challenge in addition with the PIN approval, it insures that the card owns the RSA private key.

A fake card will be unable to retrieve the terminal challenge with the PIN approval as it does not own the RSA private key. It will thus be unable to return it to the terminal. Yes-cards would thus be detected.

According to an embodiment, said terminal challenge is a unpredictable number generated in the terminal.

This embodiment enables a simple implementation for the terminal challenge generation and terminal challenge management.

According to a preferred embodiment of the invention, in case the decrypted PIN code is not correct, the decrypted terminal challenge (TUN) is not returned by the smart card to the terminal.

This enables to avoid any risk of interception of the terminal challenge by a fake card that could use it to simulate the behavior of the real card.

The present invention also concerns a transaction terminal able to implement steps of the method of securely managing and confirming a transaction according to the invention and comprising a user interface enabling a user to enter a PIN code, an encapsulation module to encapsulate the PIN code in an EMV frame and a smart card interface enabling the terminal to transmit the EMV frame to a smart card for it to check the entered PIN code and to receive a PIN approval from the smart card, said transaction terminal being **characterized in that** it further comprises a terminal challenge generator, the encapsulation module being able to encapsulate the terminal challenge in the EMV frame while encapsulating the PIN code and to ask for the smart card to return the decrypted terminal challenge and in that it further comprises a confirmation module able to receive and check the PIN approval and the returned decrypted terminal challenge to confirm the transaction.

Such a device requires the return of the terminal challenge to confirm the transaction.

At last, the invention also concerns a smart card able to interact with a terminal of the invention and to implement the steps processed by the smart card in a method of the invention comprising a communication interface to receive an EMV frame, a decryption module to decrypt the EMV frame in order to extract a PIN code and a terminal challenge, the communication interface being such that the decrypted terminal challenge is sent to the terminal with the PIN approval or disapproval.

Such a smart card will enable the terminal to check its ability to decrypt the EMV frame and thus will enable to detect a fake card inserted between the terminal and a real card.

In a preferred embodiment, the communication interface is such that the decrypted terminal challenge is returned by the smart card only with a PIN approval.

This preferred embodiment enables not to return the TUN in case the decrypted PIN is not correct. It avoids any fake card to intercept the TUN and to use it to answer a fake answer to the terminal.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 represents a flowchart of the method of the invention with a real card having decryption means;
- Figure 2A and 2B show respectively an EMV frame as used in the prior art and an EMV frame as used in the invention;
- Figure 3 represents a flowchart of the method of the invention with a fake card inserted between the terminal and a real card;
- Figure 4 schematically shows a terminal of the invention interacting with a smart card of the invention.

### DETAILED DESCRIPTION OF EMBODIMENTS OF THE INVENTION

In the following detailed description, reference is made to the accompanying drawings that show, by way of illustration, specific embodiments in which the invention may be practiced. These embodiments are described in sufficient detail to enable those skilled in the art to practice the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views. Moreover, when an action is said to be performed by a device, it is in fact executed by a microprocessor in this device controlled by instruction codes recorded in a program memory on the said device.

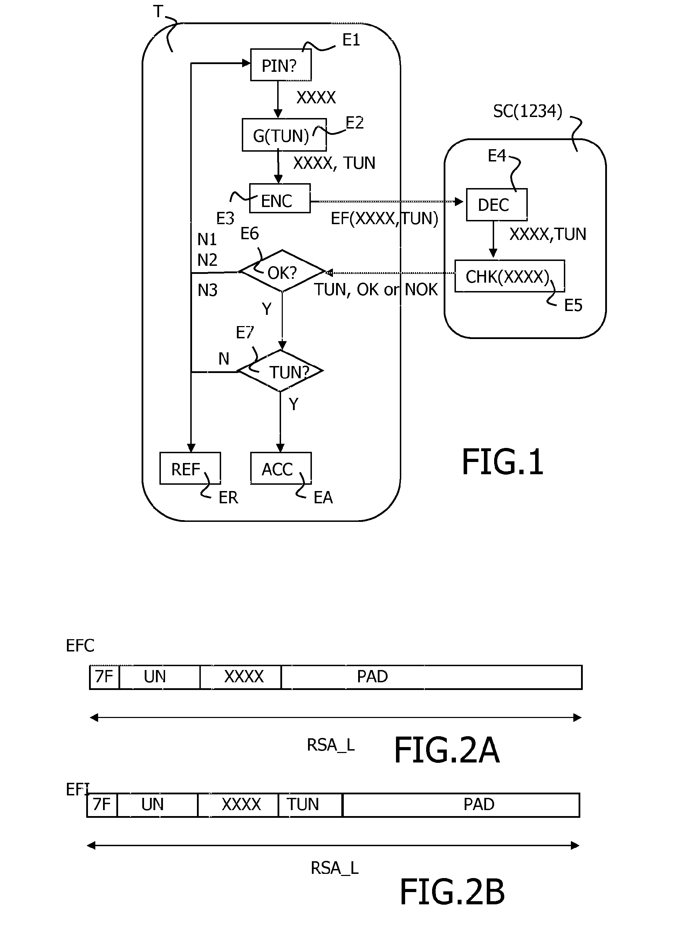

FIG. 1 is a flowchart of the method of the invention. The user has previously made a smart card SC interacts with a terminal T. A PIN code, here 1234, is associated to the smart card SC. Besides the smart card SC has a pair of private/public keys of which the public one is transferred to the terminal T at the beginning of the transaction.

In a first step E1 of the invention, the user is asked by the terminal to enter his PIN code XXXX.

In a second step E2, the terminal is generating G(TUN) a challenge. In the example of figure 1, the challenge is an unpredictable number TUN.

Then, in a step E3, the entered PIN code and the unpredictable number TUN is encapsulated ENC is an EMV frame EF(XXXX, TUN).

Figure 2A schematically shows a classical EMV frame EFC of the length RSA_L of the key used by the smart card, typically an RSA key. The EMV norm is such that communications between terminal and smart card are carried by such frame of the size of the modulus of an RSA key as used on smart card, typically 1024 bits. It enables among other to the smart card SC to send the public key of the smart card SC to the terminal T in order for it to encrypt the subsequently exchanged frames.

The length of the RSA key is much bigger than the useful part of the frame constituted by a 7F tag, an unpredictable number UN and the entered PIN XXXX. The rest of the frame comprises padding PAD. The unpredictable number was previously received from the card SC and is returned by the terminal T to the card SC for it to check the legitimacy of the terminal T.

The invention exploits the fact that the RSA key size is much bigger than the useful current content. Plenty of room exists to add a field.

Figure 2B shows an EMV frame EFI of the invention. A field comprising the terminal unpredictable number TUN is added.

After encryption using the public key of the smart card SC in step E3, the EMV frame of the invention EF(XXXX,TUN) is sent to the smart card SC according to the EMV norm.

In case, the card SC in interaction with the terminal is a real card, it decrypts DEC the EMV frame EF(XXXX, TUN) in a step E4 of the invention. In a step E5, the entered PIN code is then compared to the PIN code 1234 associated with the smart card SC. In case it matches, an OK is sent to the terminal T. In case it does not match, a NOK is sent to the terminal T. The sending of the OK or the NOK is completed according to the invention with the terminal unpredictable number TUN as found in the decrypted EMV frame.

Nevertheless, in a preferred embodiment, when the card is sending a NOK, the card is not sending the TUN. This avoids any interception of the TUN by a fake card when the decrypted PIN is not the right one. In this embodiment, the TUN is sent in clear by the card only when the PIN verification is correct, in all other cases a NOK only is returned.

While receiving the answer of the smart card SC, the terminal checks the approval OK or disapproval NOK of the PIN code by the smart card SC in a step E6. In case it matches, the terminal T also checks the presence of the terminal unpredictable number TUN and the matching with the previously sent one in a step E7. It can admit two successive NOK, N1 and N2 in the presence of the right terminal unpredictable number, but the third will generate a refusal REF of the transaction in a step ER. In case an OK is received, the transaction is accepted ACC in a step EA.

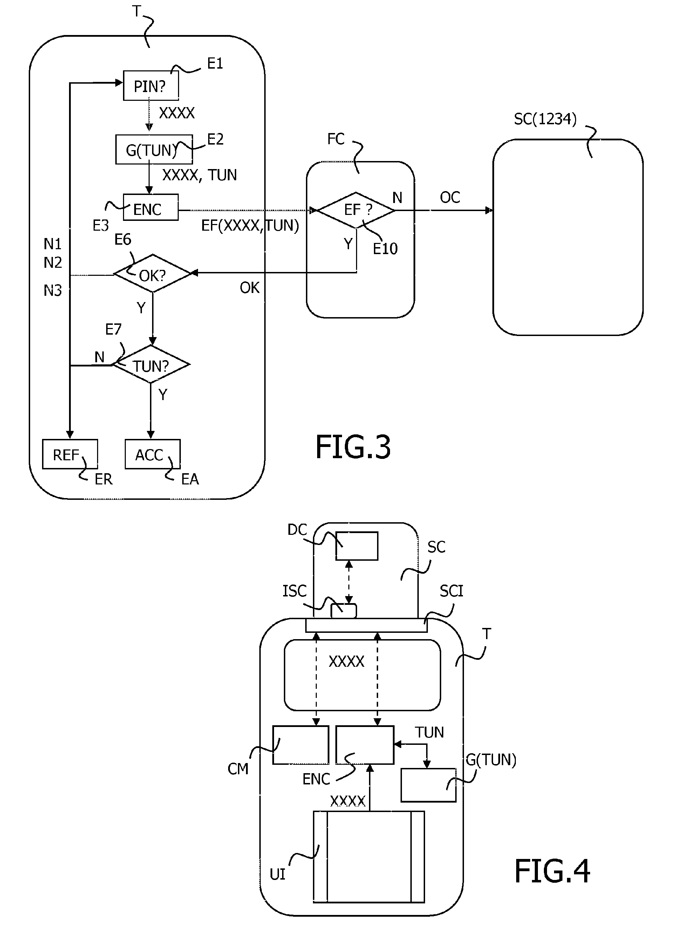

FIG. 3 shows a flow chart of the invention in case a fake Yes-card FK was inserted between the terminal T and a real smart card SC. While receiving the EMV frame EF, case Y, the fake card FC automatically sends an OK to the terminal T in a step E10, not included in the method of the invention. As the terminal T, previously to any approval of the transaction, checks the availability of the terminal unpredictable number TUN in the answer returned by the smart card SC in step E7, the transaction will not be accepted with the simple OK from the fake card FC as checked in step E6. The invention enables to counter this malicious behavior.

Even if the fake card FC transmits other commands OC than the encrypted EMV frame, the invention while not changing in any kind the format used to ask for a PIN code approval enables to detect a fake Yes-card.

Therefore, the method according to the present invention allows reducing the risks of malicious attacks. At least, the attacks are more complex to carry out for a malicious attacker.

It has to be further noted that the invention can cohabitate with less up-to-date terminals. Indeed, an up-to-date smart card having the function to process the TUN, will also be able to process EMV frame even if the TUN was not inserted by the terminal T. The security threads would still exist with such terminals but the possibility to make several type of terminals cohabitate is always interesting.

It is also possible to make the terminal able to check the card by reading records in order to know if it is an old version or not. Such a terminal will then be able to send one format with the TUN or the other one depending of the type of the card. This nevertheless can cause security leaks.

Figure 4 shows schematically a terminal T and a smart card SC of the invention. The transaction terminal T is intended to securely manage and confirm a transaction according to a method of the invention. For this purpose, it comprises a user interface UI enabling a user to enter a PIN code XXXX, typically a keyboard. It also comprises an encapsulation module ENC to encapsulate the PIN code in an EMV frame and a smart card interface SCI enabling the terminal to transmit the EMV frame to a smart card SC for it to check the entered PIN code XXXX. Said interface SCI also serves to receive a PIN approval from the smart card SC.

According to the invention, the transaction terminal T further comprises a terminal challenge generator G(TUN). Furthermore, the encapsulation module ENC is able to encapsulate the terminal challenge TUN in the EMV frame while encapsulating the PIN code XXXX. Then it asks the smart card SC to return the decrypted terminal challenge TUN. It needs the TUN to confirm the transaction.

It thus comprises a confirmation module CM able to receive and check the PIN approval and the returned decrypted terminal challenge TUN to confirm the transaction.

Besides, the smart card is able to interact with the terminal T and comprises a communication interface ISC to communicate with the terminal to receive an EMV frame. It also comprises a decryption module DC to decrypt the EMV frame in order to extract a PIN code XXXX and a terminal challenge TUN. According to the invention, the communication interface ISC is such that the decrypted terminal challenge TUN is sent to the terminal T with the PIN approval or disapproval.

According to a preferred feature, the terminal challenge TUN is sent to the terminal T only with a PIN approval and never with a PIN disapproval to avoid any malicious capture of the TUN.

## Claims

1. Method to manage and confirm a transaction using a terminal (T) and a smart card (SC) having an associated PIN code (1234) and a pair of private/public keys, said smart card (SC) being interfaced with said terminal (T), said method comprising the steps of:
- for the terminal (T), requiring (E1) a PIN code (XXXX) to be entered by a user,
- for the terminal (T), encapsulating (E3) the PIN code (XXXX) in an EMV frame (EF) encrypted with the public key of the smart card (SC),
- for the terminal (T), transmitting the encrypted EMV frame (EF) to the smart card (SC),
- for the smart card (SC), decrypting (E4) the encrypted EMV frame (EF),
- for the smart card (SC), checking (E5) the decrypted PIN code (XXXX),
- for the smart card (SC), in case the decrypted PIN code (XXXX) is correct, sending a PIN approval (OK) to the terminal (T), and a disapproval (NOK) otherwise,
said method being **characterized in that** it further comprises steps of:
- for the terminal (T), before the encapsulation step (E3), generating (E2) a terminal challenge (TUN), the encapsulation step (E3) being such that said terminal challenge (TUN) is encapsulated with the PIN code in the EMV frame (EF(XXXX,TUN)),
- for the smart card (SC), after decryption of the EMV frame (EF(XXXX,TUN)), checking the availability of the terminal challenge (TUN) in the decrypted EMV frame,
- if available, for the smart card (SC), returning the decrypted terminal challenge (TUN) to the terminal (T),
- for the terminal (T), confirming transaction after reception and check of the PIN approval or disapproval (OK, NOK) and of the returned decrypted terminal challenge (TUN).

2. Method according to claim 1, wherein said terminal challenge is an unpredictable number generated in the terminal (T).

3. Method according to one of claims 1 or 2, wherein, in case the decrypted PIN code (XXXX) is not correct, the decrypted terminal challenge (TUN) is not returned by the smart card (SC) to the terminal (T).

4. Transaction terminal (T) intended to securely manage and confirm a transaction according to a method as claimed in claim 1 or 2, comprising a user interface (UI) enabling a user to enter a PIN code (XXXX), an encapsulation module (ENC) to encapsulate the PIN code in an EMV frame and a smart card interface (SCI) enabling the terminal to transmit the EMV frame to a smart card (SC) for it to check the entered PIN code (XXXX) and to receive a PIN approval from the smart card (SC), said transaction terminal (T) being **characterized in that** it further comprises a terminal challenge generator (G(TUN)), the encapsulation module (ENC) being able to encapsulate the terminal challenge (TUN) in the EMV frame while encapsulating the PIN code (XXXX) and to ask for the smart card (SC) to return the decrypted terminal challenge (TUN) and **in that** it further comprises a confirmation module (CM) able to receive and check the PIN approval and the returned decrypted terminal challenge (TUN) to confirm the transaction.

5. Smart card (SC) able to interact with a terminal (T) as claimed in claim 3 and to implement the steps processed by the smart card (SC) in a method as claimed in one of claims 1 and 2, comprising a communication interface (ISC) to receive an EMV frame, a decryption module (DC) to decrypt the EMV frame in order to extract a PIN code (XXXX) and a terminal challenge (TUN), the communication interface (ISC) being such that the decrypted terminal challenge (TUN) is sent to the terminal (T) with the PIN approval or disapproval.

6. Smart card (SC) according to claim 5, wherein the communication interface is such that the decrypted terminal challenge (TUN) is returned by the smart card (SC) only with a PIN approval.
